# FASCICULE DE BREVET EUROPEEN

(11) **EP 0 795 614 B1**
(45) Date de publication et mention de la délivrance du brevet: **04.04.2001**
(21) Numéro de dépôt: 97400412.9
(22) Date de dépôt: 25.02.1997
(51) Int. Cl.: C21C 5/52

(54) **Procédé de conduite d'une installation comprenant une unité de traitement de métal et une unité de traitement de gaz**
Verfahren zum Betreiben einer Anlage bestehend aus einer Metallbehandlungseinheit und einer Gaserzeugungseinheit
Process for operating an installation comprising a metal treatment unit and a unit for the treatment of gas

(30) Priorité: 11.03.1996 FR 9603037
(43) Date de publication de la demande: 17.09.1997
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Guillard, Alain, 75016 - Paris (FR); Fossier, Alain, 92330 Sceaux (FR)
(74) Mandataire: Mercey, Fiona Susan

(56) Documents cités:
- EP-A- 0 628 778
- DE-B- 1 219 959
- DE-C- 527 763
- GB-A- 1 572 204
- STEEL TIMES - INCORPORATING IRON & STEEL, vol. 222, no. 10, Octobre 1994, REDHILL, SURREY, GB, page 402 XP000469086 J. RIBESSE: "Improved efficiency in non-cryogenic oxygen production"

## Description

La présente invention concerne les installations de production de métal comprenant au moins une unité de traitement de métal fonctionnant essentiellement à l'électricité et au moins une unité de traitement d'au moins un mélange gazeux fournissant au moins un gaz à l'unité de traitement de métal et fonctionnant également à l'électricité.

Les unités de traitement de métal, notamment les fours électriques, en particulier les fours à arc, sont de très gros consommateurs d'énergie électrique mais utilisent cette énergie électrique d'une manière périodique, voire erratique. Ainsi, au cours d'une année, un four à arc n'est connecté au réseau de fourniture d'électricité qu'environ les deux tiers du temps et pendant ce temps de connexion, la consommation est loin d'être stable. Les fours électriques, en particulier les fours à arc, sont par ailleurs de très gros consommateurs de gaz, notamment d'oxygène, qui sont utilisés aussi d'une façon périodique et erratique, aussi bien en quantité qu'en durée. Pour leur part, les unités de traitement de gaz, notamment de séparation de gaz pour la fourniture de gaz industriels, sont également de grosses consommatrices d'énergie.

Les contrats négociés pour de telles installations grandes consommatrices d'énergie avec les compagnies d'électricité prévoient fréquemment une part de facturation dite "fixe", généralement liée à la puissance maximale souscrite, et une part de facturation dite "proportionnelle" liée à la demande instantanée, la part fixe étant due et payée même pour les périodes de non-consommation du four à arc.

La présente invention a pour objet d'optimiser le coût énergétique de telles installations combinées.

Pour ce faire, on fait fonctionner au moins partiellement l'unité de traitement de gaz lors de périodes de consommation électrique faible ou nulle de l'unité de traitement de métal pour transformer le mélange gazeux en au moins un gaz transformé dont au moins une partie n'est pas adressée à l'unité de traitement de métal pendant lesdites périodes.

Selon d'autres caractéristiques de l'invention :
- au moins une partie du gaz transformé pendant lesdites périodes est stocké, sous forme gazeuse et/ou sous forme liquide ;
- le gaz transformé est le mélange gazeux,comprimé ou liquéfié, ou un gaz séparé constitué essentiellement d'un composant du mélange gazeux ;
- l'unité de traitement de gaz est au moins en partie une unité de séparation du type non cryogénique, par exemple à adsorption ;
- l'unité de traitement de gaz est au moins en partie une unité de séparation du type cryogénique ;
- le mélange gazeux est l'air.

On comprendra que, selon l'invention, par un décalage de phase judicieux entre l'unité de traitement de métal et l'unité de traitement/ séparation de gaz, on effectue, à la différence des délestages couramment pratiqués, un "relestage" de la consommation électrique, compatible avec les niveaux déterminés pour la part fixe. En effet, contrairement à l'électricité, les gaz peuvent être produits et stockés pour être consommés ultérieurement, sur le site ou ailleurs.

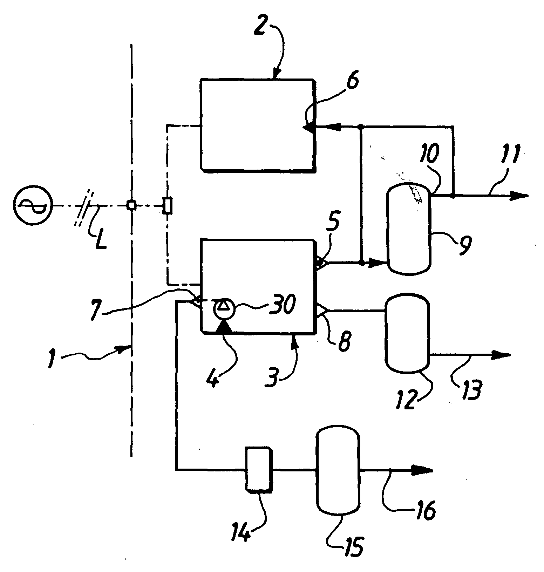

D'autres caractéristiques et les avantages de la présente invention ressortiront de la description suivante de modes de réalisation donnés à titre illustratif mais nullement limitatif, faite en relation avec le dessin annexé, sur lequel :
- la figure unique représente schématiquement une installation combinée d'un four électrique et d'une unité de traitement de gaz pour la mise en oeuvre d'un procédé selon l'invention.

Sur cette figure, on a représenté, à titre d'exemple, sur un site délimité par une ligne de frontière 1, une unité de traitement de métal 2, en l'occurrence un four électrique, et une unité 3 de séparation d'un mélange gazeux introduit par une entrée 4 et fournissant, en au moins une sortie 5, au moins un gaz adressé à une entrée 6 du four 2. Le four 2 et l'unité 3 sont alimentés en courant électrique fourni, par une ligne d'alimentation L, typiquement par une compagnie d'électricité locale.

Typiquement, le four 2 est un four à arc et l'unité de séparation 3 fournit, à partir d'air introduit en 4, de l'oxygène en sa sortie 5 et, selon le type d'unité 3, de l'azote pur ou impur ou de l'argon en une autre sortie 8.

Selon un aspect de l'invention, la sortie 5 de l'unité 3 est reliée à un dispositif de stockage 9 ayant au moins une sortie 10 susceptible d'être reliée à l'entrée 6 du four 2 ou à une ligne de distribution 11 vers un autre poste utilisateur. De façon similaire, la sortie 8 est reliée à un dispositif de stockage 12 ayant une sortie reliée à une ligne de distribution 13.

L'unité 3 peut également fournir, en une sortie 7, de l'air sur-comprimé par un compresseur 30 et provenant de l'entrée 4. Cet air comprimé est liquéfié dans un liquéfacteur 14, couplé par exemple à un circuit de gaz froid de l'unité 3, puis stocké sous forme liquide dans un réservoir isolé 15 pour être ensuite exploité, réchauffé, via un réseau 16, dans des postes utilisateurs du site.

On comprendra que, comme mentionné plus haut, lorsque le four 2 fonctionne à puissance électrique faible ou nulle, l'unité 3 est mise en oeuvre ou placée en sur-régime pour produire et stocker et/ou distribuer les gaz disponibles en ses sorties 5, 7et 8, sans affecter la consommation globale en énergie électrique de l'installation. Par contre, quand le four 2 fonctionne à forte puissance ou à puissance maximale, l'unité 3 est placée en marche réduite et les besoins en gaz du four 2 peuvent être assurés à partir du dispositif de stockage 9 complémentant la part fournie par l'unité 3 en marche réduite.

L'unité de séparation 3 peut être du type cryogénique à colonne de distillation, les gaz produits l'étant avantageusement sous forme liquide pour faciliter leur stockage. Les périodes d'inactivité courtes du four 2 sont d'autre part avantageusement mises à profit pour régénérer les bouteilles d'épuration de l'air d'alimentation de l'unité de séparation cryogénique.

L'unité de séparation 3 peut également être du type à absorption, à variation de pression ou de température, sa mise en oeuvre, en décalage de phases avec celle du four 2, produisant au moins un gaz, typiquement de l'oxygène de pureté moyenne qui est comprimé avant d'être stocké dans le dispositif de stockage 9 ou 12 correspondant.

L'unité de séparation 3 peut enfin être constituée par deux "sous-unités", l'une de type cryogénique, l'autre de type à adsorption. Typiquement, on peut imaginer le démarrage de l'unité à adsorption lors des périodes où le four est en marche réduite ou nulle : dans ce cas, l'unité cryogénique peut être sous-dimensionnée par rapport aux besoins du four, le complément étant assuré par le produit stocké dans le dispositif 9, et renouvelé à chaque période de marche réduite ou nulle du four électrique.

## Revendications

1. Procédé de conduite d'une installation de production de métal comprenant au moins une unité de traitement de métal (2) fonctionnant essentiellement à l'électricité et au moins une unité (3) de traitement d'au moins un mélange gazeux (5) fournissant au moins un gaz à l'unité de traitement de métal et fonctionnant également à l'électricité, caractérisé en ce qu'on fait fonctionner au moins partiellement l'unité de traitement de gaz(3) lors de périodes de consommation électrique faible ou nulle de l'unité de traitement de métal (2) pour transformer le mélange gazeux en au moins un gaz transformé, dont au moins une partie n'est pas adressée à l'unité de traitement de métal pendant lesdites périodes.

2. Procédé selon la revendication 1, caractérisé en ce qu'au moins une partie du gaz transformé est stockée (9 ; 12 ; 15).

3. Procédé selon la revendication 2, caractérisé en ce que le gaz transformé est stocké sous forme gazeuse.

4. Procédé selon la revendication 2, caractérisé en ce que le gaz transformé est stocké sous forme liquide.

5. Procédé selon l'une des revendications 1 à 4, caractérisé en ce que le gaz transformé est le mélange gazeux comprimé.

6. Procédé selon l'une des revendications 1 à 4, caractérisé en ce que le gaz transformé est un gaz séparé constitué essentiellement d'un composant du mélange gazeux.

7. Procédé selon l'une des revendications précédentes, caractérisé en ce que l'unité de traitement de gaz (3) est au moins en partie une unité de séparation du type non cryogénique.

8. Procédé selon la revendication 7, caractérisé en ce que l'unité de traitement de gaz (3) est au moins en partie une unité de séparation du type à adsorption.

9. Procédé selon l'une des revendications précédentes, caractérisé en ce que l'unité de traitement (3) est au moins en partie une unité de séparation du type cryogénique.

10. Procédé selon l'une des revendications précédentes, caractérisé en ce que le mélange gazeux est l'air.

## Claims

1. Method of running a metal production plant comprising at least one metal treatment unit (2) operating mainly on electricity and at least one unit (3) for treating at least one gas mixture (5) delivering at least one gas to the metal treatment unit and also operating on electricity, characterized in that the gas treatment unit (3) is made to operate at least partially during periods of low or zero electrical consumption by the metal treatment unit (2), in order to convert the gas mixture into at least one converted gas, at least part of which is not sent to the metal treatment unit during the said periods.

2. Method according to Claim 1, characterized in that at least part of the converted gas is stored (9; 12; 15).

3. Method according to Claim 2, characterized in that the converted gas is stored in gas form.

4. Method according to Claim 2, characterized in that the converted gas is stored in liquid form.

5. Method according to one of Claims 1 to 4, characterized in that the converted gas is the compressed gas mixture.

6. Method according to one of Claims 1 to 4, characterized in that the converted gas is a separated gas consisting mainly of one component of the gas mixture.

7. Method according to one of the preceding claims, characterized in that the gas treatment unit (3) is at least partly a separation unit of the non-cryogenic type.

8. Method according to Claim 7, characterized in that the gas treatment unit (3) is at least partly a separation unit of the absorption type.

9. Method according to one of the preceding claims, characterized in that the treatment unit (3) is at least partly a separation unit of the cryogenic type.

10. Method according to one of the preceding claims, characterized in that the gas mixture is air.

## Patentansprüche

1. Verfahren zum Betreiben einer Anlage zur Metallherstellung mit mindestens einer Metallbehandlungseinheit (2), die im wesentlichen mit Elektrizität betrieben wird, und mindestens einer Einheit (3) zur Behandlung von mindestens einem Gasgemisch (5), die die Metallbehandlungseinheit mit mindestens einem Gas versorgt und ebenfalls mit Elektrizität betrieben wird, dadurch gekennzeichnet, daß man die Gasbehandlungseinheit (3) in den Zeitabschnitten, in denen die Metallbehandlungseinheit (2) wenig oder gar keine Elektrizität verbraucht, zumindest teilweise so betreibt, daß das Gasgemisch in mindestens ein umgewandeltes Gas umgewandelt wird, von dem während dieser Zeitabschnitte mindestens ein Teil nicht zur Metallbehandlungseinheit geschickt wird.

2. Verfahren nach Anspruch 1, dadurch gekennzeichnet, daß man einen Teil des umgewandelten Gases lagert (9; 12; 15).

3. Verfahren nach Anspruch 2, dadurch gekennzeichnet, daß man das umgewandelte Gas in gasförmiger Form lagert.

4. Verfahren nach Anspruch 2, dadurch gekennzeichnet, daß man das umgewandelte Gas in flüssiger Form lagert.

5. Verfahren nach einem der Ansprüche 1 bis 4, dadurch gekennzeichnet, daß es sich bei dem umgewandelten Gas um das komprimierte Gasgemisch handelt.

6. Verfahren nach einem der Ansprüche 1 bis 4, dadurch gekennzeichnet, daß es sich bei dem umgewandelten Gas um ein abgetrenntes Gas handelt, das im wesentlichen aus einem Bestandteil des Gasgemischs besteht.

7. Verfahren nach einem der vorhergehenden Ansprüche, dadurch gekennzeichnet, daß es sich bei der Gasbehandlungseinheit (3) zumindest teilweise um eine nichtkryogene Trenneinheit handelt.

8. Verfahren nach Anspruch 7, dadurch gekennzeichnet, daß es sich bei der Gasbehandlungseinheit (3) zumindest teilweise um eine Adsorptions-Trenneinheit handelt.

9. Verfahren nach einem der vorhergehenden Ansprüche, dadurch gekennzeichnet, daß es sich bei der Gasbehandlungseinheit (3) zumindest teilweise um eine kryogene Trenneinheit handelt.

10. Verfahren nach einem der vorhergehenden Ansprüche, dadurch gekennzeichnet, daß es sich bei dem Gasgemisch um Luft handelt.
